# EUROPEAN PATENT APPLICATION

(11) **EP 4 635 928 A1**
(43) Date of publication of application: **22.10.2025**
(21) Application number: 24171276.9
(22) Date of filing: 19.04.2024
(51) Int. Cl.: C04B 26/16, C04B 28/04

(54) **SCHEAR VISCOSITY OF THE MULTI-COMPONENT RESIN SYSTEM BASED ON ISOCYANATE AMINE ADDUCTS**

(71) Applicant: Hilti Aktiengesellschaft, 9494 Schaan (LI)
(72) Inventor: Kumru, Memet-Emin, 86199 Augsburg (DE); Pschenitza, Markus, 87600 Kaufbeuren (DE)
(74) Representative: Hilti Aktiengesellschaft Corporate Intellectual Property

(57) **Abstract**

The present invention relates to a multi-component resin system comprising at least one component (A) and at least one component (B), wherein the component (A) comprises at least one aliphatic and/or aromatic polyisocyanate having an average NCO functionality of 2 or higher, wherein the component (B) comprises at least one amine reactive to isocyanate groups having an average NH functionality of 2 or higher, characterized in that the component (A) and/or the component (B) has a Shear viscosity in the range of from 10 to 42 Pa s. Present invention further relates to a mortar composition prepared by mixing at least one component (A) and at least one component (B) of the multi-component resin system according to the present invention. Present invention also relates to a method of chemically fixing structural elements in drilled holes, wherein the mortar composition according to the present invention or the multi-component resin system according to the present invention is used for chemical fixing. Present invention relates to a use of the mortar composition or the multi-component resin system according the present invention for chemically fixing anchoring means in drilled holes or for structural bonding. Finally, present invention relates to a use of at least one filler and optionally at least one rheology additive to adjust the Schear viscosity to be in the range of from 10 to 42 Pa·s of the multi-component resin system according to the present invention to increase the bond stress of an anchoring means chemically fixed by said multi-component resin system in a drilled hole.

## Description

The present invention relates to a multi-component resin system comprising at least one component (A) and at least one component (B), wherein the component (A) comprises at least one aliphatic and/or aromatic polyisocyanate having an average NCO functionality of 2 or higher, wherein the component (B) comprises at least one amine reactive to isocyanate groups having an average NH functionality of 2 or higher, characterized in that the component (A) and/or the component (B) has a Shear viscosity in the range of from 10 to 42 Pa s. Present invention further relates to a mortar composition prepared by mixing at least one component (A) and at least one component (B) of the multi-component resin system according to the present invention. Present invention also relates to a method of chemically fixing structural elements in drilled holes, wherein the mortar composition according to the present invention or the multi-component resin system according to the present invention is used for chemical fixing. Present invention relates to a use of the mortar composition or the multi-component resin system according the present invention for chemically fixing anchoring means in drilled holes or for structural bonding. Finally, present invention relates to a use of at least one filler and optionally at least one rheology additive to adjust the Schear viscosity to be in the range of from 10 to 42 Pa·s of the multi-component resin system according to the present invention to increase the bond stress of an anchoring means chemically fixed by said multi-component resin system in a drilled hole.

### Background

A typical construction jobsite is often open to the weather elements, such as rain, snow and elevated humidity causing the concrete elements to retain excess moisture. Even in closed or shielded from the weather jobsites, concreate elements/substrate may comprise water, often in suboptimal amounts for effective installation of chemical mortars. It is well known that chemical mortars and their mechanical and/or chemical performance can be greatly affected by water. This is described in Cook, R. A., Konz, R. C., "Factors Influencing Bond Strength of Adhesive Anchors", ACI Structural Journal, 2001, 98, 76- 86.

Usually, binder systems based on radically curing compounds such as methacrylate resins or based on epoxy resins reacted with amine curing agents are used for the production of mortars for the chemical fastening of structural elements, such as anchor rods, reinforcing bars and screws in boreholes. There are countless commercially available products based on these binder systems.

However, the known binder systems show inadequate properties especially under critical external conditions, such as elevated temperatures, uncleaned boreholes, moist or water-filled boreholes, diamond-drilled boreholes, boreholes in cracked concrete, etc.

In addition to the further development and improvement of existing binder systems, efforts are therefore also being made to investigate binder systems other than those mentioned above with regard to their suitability as a basis for mortar compounds for chemical fixing. For example, EP 3 447 078 A1 describes a chemical anchor made from a multi-component compound comprising a polyisocyanate component and a polyaspartic ester component. When the two components are mixed, polyurea is formed in a polyaddition reaction, which forms the binder of the mortar mass.

The disadvantage of these mortar compounds is that the polyaspartic acid esters used lead to insufficient crosslinking and already soften strongly at temperatures of 80 °C and accordingly show little performance at high temperatures. In addition, the cured specimens are not base-stable.

To circumvent these drawbacks, a multicomponent resin system was developed which, starting from EP 3 447 078 A1, uses an amine with an average NH functionality of 2 or greater instead of the polyaspartic ester, as described in EP 3 882 292 A1.

Thus, there is still the need for improvement of bond stress of chemical anchors based on isocyanate-amine (i.e. polyurea) based mortars under dry conditions and in particular under wet conditions.

### Description of the invention

In view of this, there is a need in the art for isocyanate amine-based mortars with a lower sensitivity to the presence of water, i.e., that do not weaken so strongly in damp-holes or even water-filled boreholes. That is to say, it is an object of the present invention to provide isocyanate-amine based mortars showing an improved bond stress not only under dry conditions but also in wet conditions.

The above object underlying the present invention is solved by a multi-component resin system comprising at least one component (A) and at least one component (B), wherein the component (A) comprises at least one aliphatic and/or aromatic polyisocyanate having an average NCO functionality of 2 or higher, wherein the component (B) comprises at least one amine reactive to isocyanate groups having an average NH functionality of 2 or higher, characterized in that the isocyanate component (A) and/or the amine component (B) has a Shear viscosity in the range of from 10 to 42 Pa s.

The present invention also relates to the use of a multi-component resin system according to the present invention for chemically fixing anchoring means in drilled holes or for structural bonding. Furthermore, the present invention relates to use of at least one filler and optionally at least one rheology additive according to any one of the embodiments as disclosed herewith to adjust the Schear viscosity to be in the range of from 10 to 42 Pa·s of the multi-component resin system according to any one of the embodiments as disclosed herewith to increase the bond stress of an anchoring means chemically fixed by said multi-component resin system in a drilled hole.

In another embodiment, the present invention relates to a method of fixing an anchoring element in a hole or crevice in a building substrate, comprising introducing the multi-component resin system according to the present invention and an anchoring element into the hole or crevice, and allowing the multi-component resin system to cure.

It has been surprisingly found by the present inventors that by adjusting the Schear viscosity of the multi-component resin system according to any one of the embodiments as disclosed herewith to be in the range of from 10 to 42 Pa s the bond stress of the chemical anchor was improved not only in the dry concreate but also in wet concreate. Thus, the multi-component resin system material according to the present invention shows improved bond stress in both dry and in wet conditions.

In the context of the present invention, the terms used herein and in the following description have the following meanings:
- *"Isocyanates"* are compounds that have a functional isocyanate group -N=C=O and are characterized by the structural unit R-N=C=O.
- *"Polyisocyanates"* are compounds that have at least two functional isocyanate groups -N=C=; diisocyanates, which are also covered by the definition of polyisocyanate, are characterized, for example, by the structure O=C=N-R-N=C=O and thus have an NCO functionality of 2.
- *"Average NCO functionality"* describes the number of isocyanate groups in the compound; in the case of a mixture of isocyanates, the "averaged NCO functionality' describes the average number of isocyanate groups in the mixture and is calculated according to the formula: averaged NCO functionality (mixture) = I average NCO functionality (isocyanate i) / nᵢ, i.e. the sum of the average NCO functionality of the individual components divided by the number of individual components.
- *"Component (A)"* is a component of the multi-component resin system which comprises at least one polyisocyanate and optionally at least one filler and/or at least one rheology additive and/or further additives.
- *"Amines"* are compounds which have a functional NH group, are derived from ammonia by replacing one or two hydrogen atoms with hydrocarbon groups and have the general structures RNH₂ (primary amines) and R₂NH (secondary amines) (see: IUPAC Compendium of Chemical Terminology, 2nd ed. (the "Gold Book"), compiled by A. D. McNaught and A. Wilkinson, Blackwell Scientific Publications, Oxford (1997)). The compound class of polyaspartic acid esters is explicitly excluded from the term amines in the context of the present inventions. These are defined separately under the term polyaspartic acid esters.
- *"NH functionality*" describes the number of active hydrogen atoms that can react with an isocyanate group in an amino group.
- *"Average NH functionality*" describes the number of active hydrogen atoms that can react with an isocyanate group in an amine and results from the number and NH functionality of the amino groups contained in the compound, i.e. the amine; in the case of a mixture of amines, the "averaged NH functionality' describes the average number of active hydrogen atoms in the mixture and is calculated according to the formula: averaged NH functionality (mixture) = I average NH functionality (amine i) / nᵢ, i.e. the sum of the average NH functionality of the individual components divided by the number of individual components.
- The term *"polyaspartic acid esters"* refers to compounds of the general formula: 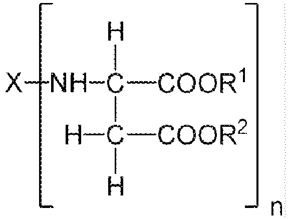 in which
   R¹ and R² can be the same or different and represent an organic group which is inert to isocyanate groups,
   X represents an n-valent organic group which is inert to isocyanate groups, and
   n represents an integer of at least 2, preferably from 2 to 6, more preferably from 2 to 4 and particularly preferably 2.
- *"Component (B)"* is a component of the multi-component resin system which comprises at least one amine and optionally at least one filler and/or at least one rheology additive and/or further additives.
- *"Isocyanate amine adducts"* are polymers that are formed by the polyaddition reaction of isocyanates with amines. The isocyanate amine adducts according to the invention are preferably polyureas which comprise at least one structural element of the form [-NH-R-NH-CO-NH-R'-NH-].
- *"Aliphatic compounds"* are acyclic or cyclic, saturated or unsaturated carbon compounds, excluding aromatic compounds.
- *"Cycloaliphatic compounds"* or *"alicyclic compounds"* are compounds having a carbocyclic ring structure, excluding benzene derivatives or other aromatic systems.
- *"Araliphatic compounds"* are aliphatic compounds having an aromatic backbone such that, in the case of a functionalized araliphatic compound, a functional group that is present is bonded to the aliphatic rather than the aromatic part of the compound.
- *"Aromatic compounds"* are compounds which follow Hückel's rule (4n+2).
- *"Mortar composition"* refers to the composition that is obtained by mixing the isocyanate component and the amine component and as such can be used directly for chemical fastening.
- *"Filler"* refers to an organic or inorganic, in particular inorganic, compound.
- *"Rheology additive"* refers to additives which are able to influence the viscosity behavior of the isocyanate component, the amine component and the multi component resin system during storage, application and/or curing. The rheology additive prevents, inter alia, sedimentation of the fillers in the polyisocyanate component and/or the amine component. It also improves the miscibility of the components and prevents possible phase separation.
- *"Temperature resistance"* refers to the change in the bond stress of a cured mortar composition at an elevated temperature compared with the reference bond stress. In the context of the present invention, the temperature resistance is specified in particular as the ratio of the bond stress at 80°C to the reference stress.
- The terms "a" or "an" as articles preceding a chemical compound class mean that one or more compounds falling under that chemical compound class may be meant. In a preferred embodiment, these articles mean only a single compound, the term *"at least one"* means numerically "*one or more".* In a preferred embodiment, the term numerically means "*one*", the terms *"include"* and *"comprising"* mean that there may be other components in addition to those mentioned. These terms are meant inclusively and therefore include *"consisting of". "Consisting of"* is meant conclusively and means that no further constituents may be present. In an embodiment, the terms *"comprise"* or *"comprising"* mean *"consisting of",* a range delimited by numbers, e.g., *"from 80* °C *to 120 °C*" means that the two corner values and each value within that range are individually disclosed.

As stated above, the present invention relates in one embodiment to a multi-component resin system material. *"Multi-component"* systems in the sense of the present invention contain several components stored separately from each other, so that curing of the ingredients contained in the components occurs only after all the components have been mixed together. In particular, the multi-component resin system material according to the invention contains at least one component (A) comprising at least one hardenable isocyanate resin, and at least one further component (B) comprising a hardening agent for the isocyanate resin of component (A). In a preferred embodiment, the multi-component resin system according to the invention is a two-component resin system. Thus, in one embodiment, the present invention relates to a multi-component resin system as defined above in the form of a two-component resin system consisting of components (A) and (B).

Preferably, the multi-component resin system of the present invention is free of any polyaspartic acid ester. It is also essential that the multi-component resin system, and in particular the amine component (component (B)) of the multi-component resin system, is free from polyaspartic esters. The term *"free of polyaspartic acid esters"* as used in the present application means that the proportion of polyaspartic acid esters in the multi-component resin system is preferably less than 2 wt.-%, more preferably less than 0.5 wt.-% and even more preferably less than 0.1 wt.-%, in each case based on the total weight of the multi-component resin system. The presence of polyaspartic acid esters in the above weight percentage ranges can be attributed to potential impurities. Particularly preferably, however, the percentage of polyaspartic acid esters in the multi-component resin system is 0.0 wt.-% based on the total weight of the multi-component resin system.

In another preferred embodiment of the present invention, the total filling ratio of a mortar mass prepared by mixing the isocyanate component (A) and the amine component (B) is in a range of 25 to 85%, preferably 35 to 75%, more preferably 37 to 60%, most preferably 40 to 50%, based on the total weight of the multi-component resin system.

Further embodiments of the present invention are described in the following detailed description and the appended claims.

Present invention provides a multi-component resin system comprising at least one isocyanate component (A) and at least one amine component (B), wherein the isocyanate component (A) comprises at least one aliphatic and/or aromatic polyisocyanate having an average NCO functionality of 2 or higher, wherein the amine component (B) comprises at least one amine reactive to isocyanate groups having an average NH functionality of 2 or higher, characterized in that the component (A) and/or the component (B) has a Shear viscosity in the range of from 10 to 42 Pa·s. It is preferred the component (A) and/or the component (B) has a Shear viscosity in the range of from 17 to 27 Pa s, more preferably in the range of from 18 to 26 Pa s. It is preferred that the shear viscosity as presently claimed is measured according to the description and the examples as disclosed herewith.

### Rheology additive

It is preferred that the multi-component resin system according to any one of the embodiments discloses herewith comprises at least one filler and optionally at least one rheology additive in at least one component (A) and/or at least one component (B).

The flow properties and thus the Schear viscosity of the multi-component resin system as presently claimed can be adjusted with the use of at least one filler and optionally at least one rheology additive. Suitable rheology additives are known in the art and can be selected from: phyllosilicates such as laponites, bentones or montmorillonite, Neuburg siliceous earth, fumed silicas, polysaccharides; polyacrylate, polyurethane or polyurea thickeners and cellulose esters. Wetting agents and dispersants, surface additives, defoamers & deaerators, wax additives, adhesion promoters, viscosity reducers or process additives can also be added for optimization. It is preferred that at least one rheology additive is selected from the group consisting of fumed silica (Cab-O-Sil^{®} TS-720), Jelucel^{®} H30, Collacral^{®} DS 6256, Collacral^{®} HP, Collacral^{®} HS, Collacral^{®} LA 30, Collacral^{®} LR 8989, Collacral^{®} LR 8990, Collacral^{®} PU 75, Collacral^{®} PU 85, Collacral^{®} VAL, Latekoll^{®} D, Latekoll^{®} P, AEROSIL^{®} R 104, AEROSIL^{®} R 200, AEROSIL^{®} R 202, AEROSIL^{®} R 300, AEROSIL^{®} R 812, Xanthan gum, algin, casein, carrageenan, guar gum, AEROSIL^{®} R 7200, AEROSIL^{®} R 8200, AEROSIL^{®} R 9200, Cab-O-Sil^{®} TS-382, Cab-O-Sil^{®} TS-530, AEROSIL^{®} R 805, AEROSIL^{®} R 380, HDK^{®} H20RH, Crayvallac^{®} SLX, K-Stay 501, Luvothix^{®} AB, 35 Cab-O-Sil^{®} TS 610, Cab-O-Sil^{®} M5, Cab-O-Sil^{®} TS-723, Cab-O-Sil^{®} M-70, Cab-O-Sil^{®} LM-150, Cab-O-Sil^{®} HS-5, and combinations of two or more thereof, preferably selected from the group consisting of AEROSIL^{®} R 200, AEROSIL^{®} R 812, AEROSIL^{®} 805, Cab-O-Sil^{®} TS-720, Cab-O-Sil^{®} MS and combinations of two or more thereof. It is preferred that at least one rheology additive is fumed silica (Cab-O-Sil^{®} TS-720).

It is preferred that the amount of at least one rheology additive in at least one component (A) is in the range of 0 to 1.7 wt.-%, preferably in the range of from 0.01 to 0.9 wt.-%, more preferably 0.1 to 0.7 wt.-% based on the total weight of at least one component (A). In another preferred embodiment it is preferred that at least one component (A) does not comprise any rheology additives. In another embodiment, it is preferred that when at least one component (A) does not comprise any rheology additive that component (B) comprises at least one rheology additive in the amounts as described below.

It is preferred that the amount of at least one rheology additive in at least one component (B) is in the range of 0 to 5 wt.-%, preferably 0.01 to 3 wt.-%, more preferably 0.1 to 2.5 wt.% based on the total weight of at least one component (B). In another preferred embodiment it is preferred that at least one component (B) does not comprise any rheology additives. In In another embodiment, it is preferred that when at least one component (B) does not comprise any rheology additive that component (A) comprises at least one rheology additive in the amounts as described above. In yet another embodiment, it is preferred that the multi-component resin system according to any one of the embodiments as disclosed herewith does not comprise any rheology additives.

### Filler

The multi-component resin system material according to the present invention preferably comprises at least one filler. It is preferred that both component (A) and component (B) comprise at least one filler.

It is preferred that at least one filler is a conventional filler as defined below.

Inorganic fillers, in particular cements such as Portland cement or aluminate cement and other hydraulically setting inorganic substances, quartz, glass, corundum, porcelain, earthenware, barite, light spar, gypsum, talc and/or chalk and mixtures thereof are preferably used as conventional filler. The inorganic fillers can be added in the form of sands, powders, or molded bodies, preferably in the form of fibers or balls. A suitable selection of the fillers with regard to type and particle size distribution/(fiber) length can be used to control properties relevant to the application, such as rheological behavior, press-out forces, internal strength, tensile strength, pull-out forces and impact strength.

Suitable conventional fillers may be selected from barite powders, preferably high density barite powders. It is preferred that barite powders are selected from the group consisting of barium sulfate (type 1 and/or 2), Albawhite 10, Albawhite 40, Albawhite 60, Albawhite 70, Albawhite 80, Albawhite 90, Albawhite 100, Albawhite 110, Barytmehl N, Barytmehl G, Schwerspat C10, Schwerspat C14 and combinations of two or more thereof.

Particularly suitable conventional fillers are quartz powders, fine quartz powders and ultra-fine quartz powders that have not been surface-treated, such as Millisil@ W3, Millisil@ W6, Millisil@ W8 and Millisil@ W12, preferably Millisil@ W12. Silanized quartz powders, fine quartz powders and ultra-fine quartz powders can also be used. These are commercially available, for example, from the Silbond@ product series from Quarzwerke. The product series Silbond@ EST (modified with epoxysilane) and Silbond@ AST (treated with aminosilane) are particularly preferred. Furthermore, it is possible to use conventional filler based on aluminum oxide such as aluminum oxide ultra-fine fillers of the ASFP type from Denka, Japan (d50 = 0.3 pm) or grades such as DAW or DAM with the type designations 45 (d50 < 0.44 pm), 07 (d50 > 8.4 pm), 05 (d50 < 5.5 pm) and 03 (d50 < 4.1 pm). Moreover, the surface treated fine and ultra-fine fillers of the Aktisil AM type (treated with aminosilane, d50 = 2.2 pm) and Aktisil EM (treated with epoxysilane, d50 = 2.2 pm) from Hoffman Mineral can be used. The fillers can be used individually or in any mixture with one another.

It is preferred that the high-density conventional fillers, such as barite powders as disclosed herewith, are comprised in the component (A) and/or (B). It is preferred that the high-density conventional fillers such as barite powders as disclosed herewith, more preferably Albawhite 10 and Albawhite 100, are comprised in the component (B) only.

The conventional filler may optionally be modified. For example, the filler may be modified, i.e., surface modified, with an adhesion promoter as described below.

The particle size of the conventional filler is not especially important according to the present invention. For example, the conventional filler may have a median particle size d50 of 100 µm or less, or 50 µm or less, such as 20 µm or less.

The at least one filler, preferably conventional filler, may be comprised in component (A) and/or component (B), and preferably is comprised in both component (A) and component (B).

It is preferred that at least one component (A) comprises at least one conventional filler according to any one of the embodiments as disclosed herewith in the amount of from 20 to 90 wt.-% based on the total weight of at least one component (A), preferably in the range of from 30 to 70 wt.-%, more preferably in the range of from 45 to 60 wt.-%, more preferably in the range of from 50 to 65 wt.-%.

It is preferred that at least one component (B) comprises at least one conventional filler according to any one of the embodiments as disclosed herewith in the amount of from 10 to 80 wt.-% based on total the weight of at least one component (B), preferably in the range of from 15 to 50 wt.-%, more preferably in the range of from 25 to 35 wt.-%.

### Functional Filler

It is preferred that the multi-component resin system according to the present invention in addition to at least one conventional filler as disclosed herewith further comprises at least one functional filler. Preferably, the amount of functional filler or the combined amount of functional filler and conventional filler in the multi-component resin system is 30 to 60 wt.-%, based on the total weight of the multi-component resin system, preferably 35 to 60 wt.-%, and more preferably 40 to 50 wt.-%.

Also preferably, the functional filler is present in the multi-component resin system in in an amount in the range of from 1.0 to 50.0 wt.-%, more preferably from 1.0 to 30.0 wt.-%, more preferably from 1.0 to 16.0 wt.-%, more preferably from 1.0 to 7.0 wt.-%, and more preferably 1.0 to 4 wt.-% based on the total weight of the multi-component resin system.

Preferably, the functional filler is present in the multi-component resin system in addition to a conventional filler. It has been found that it is not necessary to provide the functional filler in such high amounts as a conventional filler usually is used. Hence preferably, the weight ratio of the functional filler to the conventional filler in the multi-component resin system according to the present invention is at least 0.01, preferably in the range of 0.01 to 0.25, more preferably in the range of from 0.01 to 0.20, and most preferably in the range of 0.05 to 0.1.

The functional filler can be introduced by being present in the component (A) and/or in the component (B). Preferably, the functional filler is introduced by being present in component (A). Hence, the component (A) preferably comprises the functional filler in an amount in the range of from 1.0 to 20.0 wt.-%, more preferably from 1.0 to 10.0 wt.-%, even more preferably from 2.0 to 8.0 wt.-%, and most preferably from 4.0 to 6.0 wt.-%, based on the total weight of the isocyanate component (A).

Preferably, the functional filler is a hygroscopic inorganic compound which acts as a desiccant. It is preferred that the functional filler is a molecular sieve and/or a zeolite. The hydroscopic and desiccant properties of the functional filler according to any one of the embodiments as disclosed herewith serves to increase the storage stability of the component (A), and thus of the multi-component resin system of the present invention.

It is preferred that the zeolites used in the present invention are synthetic or natural zeolites and are generally characterized by the composition M^{n+x}_{/n} [(AlO2)⁻ₓ(SiO2)_{y}]·zH2O wherein N is the charge of M, usually 1 or 2, and M is a cation of an alkali or alkaline earth metal, in particular Na+, K+, Ca2+ and Mg2+.

The following can be used as zeolites:
Zeolith A (₁₂(AlO2)₁₂(SiO2)₁₂ · 27 H2O; K12((AlO2)₁₂(SiO2)₁₂) · 27 h2O),
Zeolith X (Na₈₆[(AlO2)₈₆(SiO2)₁₀₆] · 264 H2O),
Zeolith Y (Na₅₆[(AlO2)₅₆(SiO2)_{136]} · 250 H2O),
Zeolith L (k₉[(AlO2)₉(SiO2)₂₇] · 22 H2O),
Modernit (Na_{8,7}[(AlO2)_{8,7}(SiO2)_{39,3}] · 24 H2O),
Zeolith ZSM 5 (Na_{0,3H3,8}[(AlO2)_{4,1(}SiO2)_{91,9}]),
Zeolite ZSM 11 (Na_{0,1H1,7}[(AlO2)_{1,8}(SiO2)_{94,2}]). Of these, zeolite A, zeolite X, zeolite Y and zeolite ZSM 5 and zeolite ZSM 11 are preferred.

The molecular sieve, especially the zeolite, can be used as a powder, granule or as a paste (e.g. 48-50% powder dispersed in castor oil).

The synthetic zeolite is preferably a synthetic zeolite comprising particles with a particle size of up to 250 µm, especially 5 µm to 24 µm. Synthetic zeolite has a pore size of about 5 Å to about 10 Å, especially about 3 Å to about 4 Å.

The specific surface area (BET) of the zeolite particles preferentially lies between 800 m²/g and 1000 m2/g.

The residual water content of the zeolite is below 2.5% w/w, preferably below 1.5% w/w, and the water absorption capacity is below 22 - 24% w/w.

It is possible to use a mixture of two or more different types of zeolite.

The molecular sieve, especially the zeolite, is preferably used in at least one component (A) in an amount of 3 to 35 wt.-%, preferably 3 wt.-% to 20 wt.-% and especially preferably in a quantity of 3 to 7 wt.-%, more preferably 4 to 6 wt.-% based on the total weight of the component (A).

It is preferred that the functional filler as described above is dried before its use and/or addition to the component (A).

It is particularly preferred that the functional filler is a synthetic zeolite, preferably an alkali aluminosilicate zeolite (e.g. Purmol^{®} 3ST). The functional filler according to any of the embodiments as disclosed herewith has the function of absorbing water, which aids in improving storage stability of component (A) and thus of the multi-component system according to the present invention.

It is preferred that the functional filler is a hygroscopic, basic, inorganic compound. Even more preferably, the functional filler is a mineral, preferably a mineral derived from calcium, aluminum, or magnesium.

Preferably, the functional filler is selected from the list consisting of a calcium salt and a silicate. The calcium salt is selected from the list consisting of calcium oxide, calcium chloride, and calcium sulfate. More preferably, the functional filler is a silicate. Preferred silicates are aluminum silicates, magnesium silicates, and mixtures thereof. Aluminum silicates are preferably selected from the list consisting of hydrous aluminum phyllosilicates, preferably clay, most preferably clay brick powder, aluminosilicate, preferably zeolite. and Even more preferred are magnesium silicates, preferably hydrated magnesium silicates. It is preferred that the functional filler is a hydrated magnesium silicate, preferably selected from sepiolite and montmorillonite.

It is preferred that the amount of at least one filler, preferably at least one functional filler and at least one conventional filler according to any one of the embodiments as disclosed herewith, and at least one rheology additive is in the range of from 30 to 90 wt.-% based on total weight of at least one component (A), more preferably in the range of from 50 to 70 wt.-%, more preferably in the range of from 60 to 70 wt.-%, and more preferably in the range of from 62 to 68 wt.-%.

It is preferred that the amount of at least one filler, preferably at least one functional filler and at least one conventional filler according to any one of the embodiments as disclosed herewith, and at least one rheology additive in the at least one component (B) is in the range of from 10 to 80 wt.-% based on total weight of at least one component (B), preferably in the range of from 20 to 40 wt.-%, more preferably in the range of from 25 to 35 wt.-%.

### Adhesion promoter

In one embodiment of the multi-component resin system, the component (A) and/or the component (B) contains at least one silane as an adhesion promoter.

It is preferred that at least one adhesion promoter is in an amount ranging from 0.01 to 5 wt.-%, preferably in the range of from 0.1 to 3 wt.-%, based on total weight of at least one component (A) and/or at least one component (B).

By using a silane, the cross-linking of the borehole wall with the mortar composition is improved such that the adhesion increases in the cured state.

Suitable adhesion promoters are selected from the group of silanes that have at least one Si-bound hydrolysable group. It is not necessary for the silane to comprise a further functional group in addition to the Si-bound hydrolysable group, such as an isocyanate group or an amino group. Nevertheless, in addition to the Si-bound hydrolysable group, the silane may comprise one or more identical or different further functional groups, such as an amino, mercapto, epoxy, isocyanato, alkenyl, (meth) acryloyl, anhydrido or vinyl group. The Si-bound hydrolysable group is preferably a CC alkoxy group and very particularly preferably a methoxy or ethoxy group.

Suitable silanes are selected from the group consisting of 3-aminopropyltrialkoxysilanes such as 3-aminopropyltrimethoxysilane and 3-aminopropyltriethoxysilane; 3 glycidyloxypropyltrialkoxysilanes such as 3-glycidyloxypropyltrimethoxysilane and 3 glycidyloxypropyltriethoxysilane; glycidyloxymethyltrimethoxysilane; 3 glycidyloxypropylmethyldimethoxysilane; bis-(3-trialkoxysilylpropyl) amines such as bis (3-trimethoxysilylpropyl) amine and bis-(3-triethoxysilylpropyl) amine; 3mercaptopropyltrialkoxysilanes such as 3-mercaptopropyltrimethoxysilane and 3-mercaptopropylmethyldimethoxysilane;3-(meth)acryloyloxyalkyltrialkoxysilanes such as3-(meth)acryloyloxypropyltrimethoxysilane,3-(meth)acryloyloxypropyltriethoxysilane; 3-(meth)acryloyloxymethyltrimethoxysilane, 3-(meth)acryloyloxymethyltriethoxysilane and 3-(meth)acryloyloxypropylmethyldimethoxysilane; alkenylalkoxysilanes such as vinylalkoxysilanes, e.g. vinyltrimethoxysilane and vinyltriethoxysilane; tetraalkoxysilanes such as tetraethoxysilane, tetramethoxysilane and tetrapropoxysilane; 2-(3,4 epoxycyclohexyl)ethyltrimethoxysilane, N-2-(aminoethyl)-3-aminopropylmethyl diethoxysilane, N-2-(aminoethyl)-3-aminopropyl-triethoxysilane, N-phenyl-3-aminoethyl 3-aminopropyl trimethoxysilane and mixtures of two or more thereof.

Particularly suitable silanes are selected from the group consisting of 3-aminopropyltrialkoxysilanes, 3-glycidyloxyalkyltrialkoxysilanes, bis (3-trialkoxysilylpropyl) amines, 3-mercaptopropyltrialkoxysilanes, 3 (meth)acryloyloxyalkyltrialkoxysi lanes, alkenylalkoxysilanes, tetraalkoxysilanes and mixtures of two or more thereof.

Most particularly suitable silanes are 3-glycidoxypropyldimethoxysilane, 3 glycidoxypropyltrimethoxysilane, 3-trimethoxysilylpropyl methacrylate and vinyltrimethoxysilane.

The silane can be contained in the multi-component resin system in an amount of up to 10 wt.-%, preferably from 0.1 to 5 wt.-%, more preferably from 0.5 to 2 wt.-%, based on the total weight of the multi-component resin system. The silane can be contained entirely in one component, i.e., the component (A) or the component (B), or be split between the two components, i.e., split between the component (A) and the component (B).

### Isocyanate component (A)

The multi-component resin system according to the invention comprises at least one component (A) at and at least one component (B). Before use, the component (A) and the component (B) are provided separately from one another in a reaction-inhibiting manner.

At least one component (A) comprises at least one polyisocyanate. All aliphatic and/or aromatic isocyanates known to a person skilled in the art and having an average NCO functionality of 2 or more, individually or in any mixtures with one another, can be used as the polyisocyanate. The average NCO functionality indicates how many NCO groups are present in the polyisocyanate. Polyisocyanate means that two or more NCO groups are contained in the compound.

Suitable aromatic polyisocyanates are those having aromatically bound isocyanate groups, such as diisocyanatobenzenes, toluene diisocyanates, diphenyl diisocyanates, diphenylmethane diisocyanates, diisocyanatonaphathalenes, triphenylmethane triisocyanates, but also those having isocyanate groups that are bound to an aromatic group via an alkylene group, such as a methylene group, such as bis- and tris (isocyanatoalkyl) benzenes, toluenes and xylenes.

Preferred examples of aromatic polyisocyanates are: 1,3-phenylene diisocyanate, 1,4 phenylene diisocyanate, 2,4-toluylene diisocyanate, 2,5-toluylene diisocyanate, 2,6-toluylene diisocyanate, 1,3-xylylene diisocyanate, 1,4-xylylene diisocyanate, tetramethyl-1,3-xylylene diisocyanate, tetramethyl-1,4-xylylene diisocyanate, 1,3 bis(isocyanatomethyl)benzene, 1,4-bis(isocyanatomethyl)benzene, ethylphenyl diisocyanate, 2-dodecyl-1,3-phenylene diisocyanate, 2,4,6-triisopropyl-m-phenylene diisocyanate, 2,4,6-trimethyl-1,3-phenylene diisocyanate, 1,5 naphthylene diisocyanate, 3,3'-dimethyl-4,4'-biphenyl diisocyanate, 3,3'-dimethoxy-4,4' biphenyl diisocyanate, diphenylene methane 2,4'-diisocyanate, diphenylene methane-2,2'-diisocyanate, diphenylene methane-4,4' diisocyanate, triphenylmethane-4,4',4"-triisocyanate, 5-(p-isocyanatobenzyl)-2-methyl m-phenylene diisocyanate, 4,4-diisocyanato-3,3,5,5-tetraethyldiphenylmethane, 5,5' ureylene di-o-tolyl diisocyanate, 4-[(5-isocyanato-2-methylphenyl)methyl]-m-phenylene diisocyanate, 4-[(3-isocyanato-4-methylphenyl)methyl]-m-phenylene diisocyanate, 2,2' methylene-bis[6-(o-isocyanatobenzyl)phenyl] diisocyanate.

Aliphatic isocyanates which have a carbon backbone (without the NCO groups contained) of 3 to 30 carbon atoms, preferably 4 to 20 carbon atoms, are preferably used. Examples of aliphatic polyisocyanates are bis(isocyanatoalkyl) ethers or alkane diisocyanates such as methane diisocyanate, propane diisocyanates, butane diisocyanates, pentane diisocyanates, hexane diisocyanates (e.g. hexamethylene diisocyanate, HDI), heptane diisocyanates (e.g. 2,2-dimethylpentane-1,5-diisocyanate), octane diisocyanates, nonane diisocyanates (e.g. trimethyl HDI (TMDI), usually as a mixture of the 2,4,4- and 2,2,4-isomers), 2-methylpentane-1,5-diisocyanate (MPDI), nonane triisocyanates (e.g. 4-isocyanatomethyl-1,8-octane diisocyanate, 5 methylnonane diisocyanate), decane diisocyanates, decane triisocyanates, undecane diisocyanates, undecane triisocyanates, dodecane diisocyanates, dodecane triisocyanates, 1,3- and 1,4-bis-(isocyanatomethyl)cyclohexane (H6XDI), 3 isocyanatomethyl-3,5,5-trimethylcyclohexylisocyanate(isophoronediisocyanate, I PDI), bis-(4-isocyanatocyclohexyl)methane (H12MDI), bis-(isocyanatomethyl)norbornane (NBDI), 3(4)-isocyanatomethyl-1-methyl-cyclohexyl isocyanate (IMCI), octahydro-4,7 methano-1H-indenedimethyl diisocyanate, norbornene diisocyanate, 5-isocyanato-1-(isocyanatomethyl)-1,3,3-trimethylcyclohexane, ureylene-bis(p-phenylenemethylene-p phenylene)diisocyanate.

Particularly preferred isocyanates are hexamethylene diisocyanate (HDI), trimethyl HDI (TMDI), pentane diisocyanate (PDI), 2-methylpentane-1,5-diisocyanate (MPDI), 3-isocyanatomethyl-3,5,5-trimethylcyclohexylisocyanate (isophorone diisocyanate; IPDI), 1,3- and 1,4-bis-(isocyanatomethyl)cyclohexane (HeXDI), bis-(isocyanatomethyl)-norbornane (NBDI), 3(4)-isocyanatomethyl-1-methyl cyclohexyl isocyanate (IMCI) and/or 4,4'-bis(isocyanatocyclohexyl)methane (H12MDI) or mixtures of these isocyanates.

Even more preferably, the polyisocyanates are present as prepolymers (preferably homopolymers), biurets (preferably diisoxyanate-biuret-additionproducts), isocyanurates, iminooxadiazinediones, uretdiones and/or allophanates, which can be produced by oligomerizing difunctional isocyanates as described above or by reacting the isocyanate compounds as described above with polyols or polyamines, individually or as a mixture, and which have an average NCO functionality of 2 or more. Preferably, the average NCO functionality is in the range of from 2.5 to 5.5, more preferably 2.7 to 4.0, and most preferably 2.9 to 3.6.

Examples of suitable, commercially available isocyanates are Desmodur^{®} N 3900, Desmodur^{®} N 100, Desmodur^{®} N 3200, Desmodur^{®} N 3300, Desmodur^{®} ultra N 3600, Desmodur^{®} N 3700, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551, Desmodur^{®} XP 2838, Desmodur^{®} XP 2840, Desmodur^{®} N3500, Desmodur^{®} NZ 300, Desmodur^{®} E 30600, Bayhydur XP 2547, Bayhydur XP 2451/1, Bayhydur Ultra 307 Desmodur^{®} VL, Desmodur^{®} VL 50, Desmodur^{®} VL 51, Desmodur^{®} ultra N 3300, Desmodur^{®} eco N 7300, Desmodur^{®} E23, Desmodur^{®} E XP 2727, Desmodur^{®} E 2863 XP, Desmodur^{®} H, Desmodur^{®} VKS 20 F, Desmodur^{®} 44V20I, Desmodur^{®} 44P01, Desmodur^{®} 44V70 L (Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (Vencorex), Basonat HB 100, Basonat HI 100, Basonat HI 100 NG, Basonat HI 2000 NG (BASF), Takenate 500, Takenate 600, Stabio D-376N (Mitsui), Duranate 24A-100, Duranate TPA-100, Duranate THA-100 (Asahi Kasai), Coronate HXR, Coronate HXLV, Coronate HX, Coronate HK (Tosoh).

One or more polyisocyanates are contained in the component (A) preferably in a proportion of from 20 to 100 wt.-%, more preferably in a proportion of from 30 to 90 wt.-%, more preferably in a proportion of from 35 to 65 wt.-%, more preferably in a proportion of from 25 to 35 wt.-% based on the total weight of the component (A).

Preferably, the degree of filling of the component (A) is 20 to 90 wt.-%, more preferably 30 to 80 wt.-% more preferably 60 to 70 wt.-%, based on the total weight of the component (A).

### Amine component (B)

The component (B), which is provided separately from the component (A) in the multi-component resin system in a reaction-inhibiting manner, comprises at least one amine which is reactive to isocyanate groups of the component (A) and has an average NH functionality of 2 or more.

According to a preferred embodiment, the amine which is reactive to isocyanate groups is selected from the group consisting of aliphatic, alicyclic, araliphatic and aromatic amines, particularly preferably from the group consisting of alicyclic and aromatic amines.

Examples of suitable amines which are reactive to isocyanate groups are given below, but without restricting the scope of the invention. These can be used either individually or in any mixtures with one another. Examples are: 1,2 diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropyl-aminopropylamine(DMAPAPA), 2,4-diamino-3,5-dimethylthiotoluene (dimethylthiotoluene diamine DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 3-aminomethyl-3,5,5-trimethylcyclohexy amine (isophorone diamine (IPDA)), diaminodicyclohexylmethane (PACM), diethylmethylbenzenediamine (DETDA), 3,3'-diaminodiphenylsulfone (33 dapsone), 4,4'-diaminodiphenylsulfone (44 dapsone), mixed polycyclic amines (MPCA) (e.g. Ancamine 2168), dimethyldiaminodicyclohexylmethane (Laromin C260), 2,2-bis(4-aminocyclohexyl)propane, (3(4),8(9)bis(aminomethyldicyclo[5.2.1.02, 6]decane (mixture of isomers, tricyclic primary amines; TCD diamine), methylcyclohexyl diamine (MCDA), N,N'-diaminopropyl-2 methyl-cyclohexane-1,3-diamine, N,N'-diaminopropyl-4-methylcyclohexane-1,3 diamine, N-(3-aminopropyl)cyclohexylamine, and 2-(2,2,6,6-tetramethylpiperidin-4 yl)propane-1,3-diamine, 2-methylpentandiamine (e.g. DYTEK^{®} A), N-ethylaminopiperazine (N-EAP), N-aminoethyl-piperazine (N-AEP), 2,4,6-trimethyl-m-phenylendiamine, 2,4,6-tri(propan-2-yl)benzol-1,3-diamine, 4-ethyl-2,6-di(propan-2-yl)benzol-1,3-diamine, 4-methyl-2,6-di(propan-2-yl)benzol-1,3-diamine, 2,5-bis(methylsulfonyl)-1,4-benzoldiamine, chlorodiethylmethylbenzoldiamine (e.g. 5-chloro-4,6-diethyl-2-methyl-1,3-benzolediamine, 5-chloro-4,6-diethyl-6-methyl-1,3-benzole-diamine), 4-fluoro-5-(1-methylethyl)-1,2-benzoldiamine, 4,4'-methylen-bis[N-(1-methylpropyl)phenylamine], 4,4'-methylenbis(2,6-diethylaniline) (MBDA), 4,4'-methylenbis(N-sec-butylcyclohexanamine) (e.g. Clearlink^{®} 1000), 4,4'-methylen-bis[N-(1-methylpropyl)-3,3'-dimethylcyclohexaneamine] (e.g. Clearlink^{®} 3000), 4,4'-methylen-bis(3-chloro-2,6-diethylaniline) (MBCDA), the reaction product of 2-propenenitrile with 3-amino-1,5,5-trimethylcyclohexanmethanamine (e.g. Jefflink^{®} 745), 3-((3-(((2-cyanoethyl)amino)methyl)-3,5,5-trimethylcyclohexyl)amino)propiononitrile (e.g. Jefflink^{®} 136 or Baxxodur^{®} PC136), N,N'-di-sec-butyl-p-phenylendiamine, 2,4,6-trimethyl-m-phenylendiamine and 2,4,6-trimethyl-5-nitro-1,3-benzoldiamine as well as mixtures of two or more of these amines.

Particularly preferred amines are diethylmethylbenzenediamine (DETDA, such as Ethacure^{®} 100 Plus), 2,4-diamino 3,5-dimethylthiotoluene (dimethylthio-toluenediamine, DMTDA) in particular a mixture of isomers of 6-methyl-2,4-bis(methylthio)phenylene-1,3-diamine and 2-methyl-4,6-bis(methylthio)phenylene-1,3-diamine (also denoted as DMTDA, e.g., Ethacure^{®} 300), 4,4'-methylene-bis[N (1-methylpropyl)phenylamine] (such as Unilink^{®} 4200), 4,4'-methylenebis(2,6-diethylaniline) (MBDA), 4,4'-methylenebis(N-sec-butylcyclohexanamine) (Clearlink@ 1000), 3,3'-diaminodiphenylsulfone (33 dapsone), 4,4'-diaminodiphenylsulfone (44 dapsone), N,N'-di-sec-butyl-p phenylenediamine (such as Unilink^{®} 4100), and 2,4,6-trimethyl-m-phenylenediamine, 4,4'-methylenebis(N-(1 methylpropyl)-3,3'-dimethylcyclohexanamine (Clearlink@ 3000), the reaction product of 2-propenenitrile with 3-amino-1,5,5-trimethylcyclohexanemethanamine (Jefflink@ 745), 3-((3-(((2-cyanoethyl)-amino)methyl)-3,5,5-trimethylcyclohexyl)amino)propiononitrile (Jefflink@ 136 or Baxxodur@ PC136), a mixture of DETDA and IPDA (e.g. Ethacure^{®} 270), a mixture of 4,4'-methylenebis(N-sec-butylaniline), 4,4'-methylenebis(2,6-diethylaniline) and diethylmethylbenzoldiamine (e.g. Ethacure^{®} 520), 4,4'-methylene-bis(3-chloro-2,6-diethylaniline) (MBCDA), chlorodiethylmethylbenzoldiamine (e.g. 5-chloro-4,6-diethyl-2-methyl-1,3-benzoldiamine, 5-chloro-4,6-diethyl-6-methyl-1,3-benzoldiamine), Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Hardener H 14-50, Epilox^{®}-Hardener H15-60, Epilox^{®}-Hardener M1148, EPIKURE Curing Agent 3050, EPIKURE Curing Agent F205, Ethacure^{®} 300, Ethacure^{®} 100 Plus.

Most particularly preferred amines are 4,4'-methylene-bis[N-(1 methylpropyl)phenylamine], an isomer mixture of 6-methyl-2,4 bis(methylthio)-phenylene-1,3-diamine and 2-methyl-4,6-bis(methylthio)phenylene-1,3 diamine (Ethacure^{®} 300), diethyltoluoldiamine (DETDA, e.g. Ethacure^{®} 100 Plus), 4,4'-methylene-bis[N-(1-methylpropyl)-phenylamine] (e.g. Unilink^{®} 4200), 4,4'-methylene-bis(3-chloro-2,6-diethylaniline) (MBCDA), chlorodiethylmethylbenzolediamine, Aradur^{®} 33225, Ancamide^{®} 3419, Epilox^{®}-Hardener H 14-50. Preferred amines are DMTDA; DETDA, and mixtures therefrom. Most preferred amines are aromatic diamines such as Ethacure^{®} 300.

One or more amines are contained in the component (B) preferably in a proportion of from 20 to 100 wt.-%, more preferably in a proportion of from 30 to 70 wt.-%, more preferably in a proportion of from 35 to 70 wt.-%, and even more preferably 50 to 65 wt.-% based on the total weight of the component (B).

Preferably, the degree of filling of the component (B) is 10 to 70 wt.-%, more preferably 40 to 50 wt.-%, more preferably 25 to 35 wt.-% based on the total weight of the component (B).

The quantity ratios of the polyisocyanate and the amine of the multi-component resin system are preferably selected such that the ratio of the average NCO functionality of the polyisocyanate to the average NH functionality of the amine is between 0.3 and 2.0, preferably between 0.5 and 1.8, more preferably between 0.5 and 1.5, even more preferably between 0.7 and 1.5, more preferably 0.7 to 1.3, more preferably 0.75 to 1.65, more preferably the ratio is 1.26 : 1.

A mixture of different polyisocyanates and/or different amines can be used to adjust the rate of curing. In this case, their quantity ratios are selected such that the ratio of the averaged NCO functionality of the isocyanate mixture to the averaged NH functionality of the amine mixture is between 0.3 and 2.0, preferably between 0.5 and 1.8, more preferably between 0.5 and 1.5, even more preferably between 0.7 and 1.5 and most preferably between 0.7 and 1.3, more preferably 0.75 to 1.65, more preferably the ratio is 1.26 to 1.

### Mortar Composition

Present invention further relates to a mortar composition prepared by mixing at least one component (A) and at least one component (B) of the multi-component resin system according to any of the preceding embodiments.

### Method of the present invention

Present invention also relates to a method of chemically fixing structural elements in drilled holes, wherein the mortar composition according to any one of embodiments disclosed herewith or the multi-component resin system according to any one of embodiments disclosed herewith is used for chemical fixing.

### Use of the multi-component resin system

The multi-component resin system is preferably present in cartridges or film pouches which are characterized in that they comprise two or more separate chambers in which the component (A) and the component (B) are separately arranged in a reaction-inhibiting manner.

For the use as intended of the multi-component resin system, the component (A) and the component (B) are discharged out of the separate chambers and mixed in a suitable device, for example a static mixer or dissolver. The mixture of component (A) and component (B) (mortar composition) is then introduced into the optionally previously cleaned borehole by means of a known injection device. The fastening element to be fastened is then inserted into the mortar composition and aligned. The reactive constituents of the component (A) react with the amino groups of the component (B) by polyaddition such that the mortar composition cures under environmental conditions within a desired period of time, preferably within a few minutes or hours.

Thus, present invention also relates to a use of the mortar composition according to any one of the embodiments disclosed herewith or the multi-component resin system according to any one of the embodiments disclosed herewith for chemically fixing anchoring means in drilled holes or for structural bonding, preferably for fixing anchoring means in drilled holes or for structural bonding under both wet and dry conditions.

Finally, the present invention relates to a use of at least one filler and optionally at least one rheology additive to adjust the Schear viscosity to be in the range of from 10 to 42 Pa·s, preferably in the range of from 17 to 27 Pa·s, of the multi-component resin system according to any one of the embodiments disclosed herewith to increase the bond stress of an anchoring means chemically fixed by said multi-component resin system in a drilled hole.

### EXAMPLES

Unless stated otherwise, all constituents of the compositions that are listed here are commercially available and were used in the usual commercial quality.

**Table 1: Names of components and their description**

| **Name or abbreviation** | **Description** | **Supplier** |
|---|---|---|
| Tolonate^{™} HDT- LV LM | Aliphatic polyisocyanate based on hexamethylene diisocyanate trimer | Vencorex France |
| Ethacure^{®} 300 Curative (dimethylthiotoluenediamines 95-97%, monomethylthiotoluenediamine 2-3%; Equivalent weight with isocyanates 107) | Mixture of 3,5-di(methylthio)toluenediamine and 2,4-diamino-3,5-dimethylthiotoluene | Albermale Corporation |
| Dynasylan^{®} MEMO | 3-methacryloxypropyltrimethoxysilane | Evonik |
| TEC | Triethyl citrate | TCl |
| Purmol^{®} 3ST | Synthetic zeolite | Zeochem AG |
| P10 | Quartz sand | Santiago |
| Cab-O-Sil^{®} TS-720 | Fumed silica | Cabot |
| Dyckerhoff Weiss CEM I 42,5R | Portland cement | Dyckerhoff GmbH, Amöneburg plant |
| Albawhite 10 | White barium sulfate extender | Sachtleben Minerals GmbH & CO. KG |
| Albawhite 100 | Extremely white barium sulfate extender | Sachtleben Minerals GmbH & CO. KG |

### Manufacture of components:

In a plastic container, the liquid components were mixed with a wooden spatula. Fillers and thickeners were added to the mixture of the prepared liquid components and premixed by hand before being further mixed in a speed mixer (Hauschild SpeedMixer^{®} DAC 800 FVZ) for 1.5 minutes at 1500 rpm.

### Method for measuring Shear viscosity:

Measuring of Schear viscosity of liquids is well known in the art. In the present case, the measurement of the Shear viscosity of the reactive resin components V1 (comparative) and reactive resin components A1 and A2 (according to the present invention) was carried out using a plate-to-plate measuring system according to DIN 53019. The diameter of the plate is 20 mm and the gap spacing is 3 mm. To prevent the sample from escaping from the gap, a stainless-steel ring was used, which has a distance of 1 mm from the upper plate. The measuring temperature was 25°C. The method consisted of three intervals: 1. Low Shear, 2. High Shear, 3. Low Shear. In the first interval, Shear for 3 minutes at 0.5/s. In the second interval, the Shear speed is logarithmically increased from 0.8/s to 100/s in 8 increments of 15 seconds each. The individual increments are: 0.8/s; 1,724/s; 3.713/s; 8/s; 17.24/s; 37.13/s; 80/s; 100/s. The third interval is the repetition of the first interval. At the end of each interval, the corresponding viscosities were read. Often, however, only the value of the second interval was given at 100/s. The values given in Table 2 correspond to the value of the second interval at 100/s. Three measurements were taken in each case, with the values given in Table 2 being the mean of the three measurements.

### Determination of bond stress:

To determine bond stress of the mortar compositions, a high-strength anchor threaded rod M12 was used, which was anchored into a hammer-drilled borehole with a diameter of 14 mm and a borehole depth of 60 mm or 72 mm (for B7) with the two-component mortar composition according to the present invention in C20/25 concrete slabs. Components A and B were mixed with ratio of 1.26 to 1 based on their NCO and AHEQ values using a speed mixer at 1500 rpm for 30 s then transferred to a one-component silicone cartridge and injected into the borehole.

After a curing time of 24 h or 48 h (for B7) at a temperature of 23 °C, the bond stress was determined by centrically pulling out the confined anchor threaded rod. The mean bond stress was determined based on the results of five anchors.

### Cleaning of borehole:

R1 (reference borehole): The borehole made in dry C20/25 concrete was cleaned by compressed air and brush as follows: 2x compressed air 6 bar, 2x brushed and 2x compressed air 6 bar.

B7: The borehole made in the water saturated C20/25 concrete was cleaned by means of a vacuum cleaner and brush as follows: 1x vac, 1x brushed and 1x vac (vac= vacuum suction with a vacuum cleaner).

### Examples:

| **Components** | **V1** | **A1** | **A2** |
|---|---|---|---|
| **Component (A)** | | | |
| Tolonate^{™} HDT- LV LM | 33.5 | 33.5 | 33.5 |
| Dynasylan^{®} MEMO | 2.0 | 2.0 | 2.0 |
| Purmol^{®} 3ST | 5.0 | 5.0 | 5.0 |
| Cab-O-Sil^{®} TS-720 | 1.8 | 0.6 | - |
| Quartz sand (P10) | 39.7 | 40.9 | 41.5 |
| Dyckerhoff Weiss CEM I 42,5R | 18.0 | 18.0 | 18.0 |
| | | | |

| **Component (B)** | | | |
|---|---|---|---|
| Ethacure^{®} 300 Curative | 58.0 | 57.0 | 56.0 |
| TEC | 14.0 | 14.0 | 14.0 |
| Cab-O-Sil^{®} TS-720 | 6.0 | 2.0 | - |
| Albawhite 10 | 8.0 | 10.0 | 10.0 |
| Albawhite 100 | 14.0 | 17.0 | 20.0 |
| | | | |
| | | | |
| Volume mixing ratio | 3 : 1 | 3 : 1 | 3 : 1 |
| Isocyanate: Amine ratio | 1.26 : 1 | 1.26 : 1 | 1.26 : 1 |
| Borehole depth R1 in mm | 60.0 | 60.0 | 60.0 |
| Borehole depth B7 in mm | 72.0 | 72.0 | 72.0 |
| Curing time R1 in h | 24.0 | 24.0 | 24.0 |
| Curing time B7 in h | 48.0 | 48.0 | 48.0 |
| Shear viscosity of component (A) 100/s to Pa·s | 43.2 | 24.5 | 19.1 |
| Bond stress R1 in N/mm² | 31.3 | 33.5 | 33.9 |
| Bond stress B7 in N/mm² | 22.6 | 24.5 | 25.8 |

Comparative example V1 shows low bond stress under R1, B7 conditions. Examples according to the present invention A1 and A2 clearly show that by reducing of the viscosity of the component (A) the bond stress under both dry and wet conditions (R1 and B7 respectively) is improved.

### Cited prior art:

- Cook, R. A., Konz, R. C., "Factors Influencing Bond Strength of Adhesive Anchors", ACI Structural Journal, 2001, 98, 76- 86
- EP 3 447 078 A1
- EP 3 882 292 A1

## Claims

1. A multi-component resin system comprising at least one isocyanate component (A) and at least one amine component (B), wherein the isocyanate component (A) comprises at least one aliphatic and/or aromatic polyisocyanate having an average NCO functionality of 2 or higher, wherein the amine component (B) comprises at least one amine reactive to isocyanate groups having an average NH functionality of 2 or higher, **characterized in that** the isocyanate component (A) and/or the amine component (B) has a Shear viscosity in the range of from 10 to 42 Pa·s, preferably in the range of from 17 to 27 Pa s, preferably wherein the Shear viscosity is measured according to the method described in the description.

2. The multi-component resin system according to claim 1, wherein at least one isocyanate component (A) and/or at least one amine component (B) comprises at least one filler and optionally at least one rheology additive.

3. The multi-component resin system according to claim 2, wherein the amount of at least one rheology additive in at least one component (A) is in the range of 0 to 1.7 wt.-%, preferably in the range of from 0.1 to 0.9 wt.-%, more preferably 0.2 to 0.7 wt.-% based on at least one component (A).

4. The multi-component resin system according to any one of claims 2 or 3, wherein the amount of at least one rheology additive in at least one component (B) is in the range of 0 to 5 wt.-%, preferably 0.1 to 3 wt.-%, more preferably 1 to 2.5 wt.% based on at least one component (B).

5. The multi-component resin system according to any one of claims 2 to 4, wherein the amount of at least one filler and optionally at least one rheology additive in at least one component (A) is in the range of from 30 to 90 wt.-% based on total weight of at least one component (A), more preferably in the range of from 50 to 80 wt.-%, more preferably in the range of from 60 to 70 wt.-%.

6. The multi-component resin system according to any one of claims 2 to 5, wherein the amount of at least one filler and optionally at least one rheology additive in at least one component (B) is in the range of from 10 to 80 wt.-% based on total weight of at least one component (B), preferably in the range of from 20 to 40 wt.-%, more preferably in the range of from 25 to 35 wt.-%.

7. The multi-component resin system according to any one of claims 1 to 6, wherein at least one component (A) and/or at least one component (B) further comprise at least one adhesion promoter in an amount ranging from 0.01 to 5 wt.-%, preferably in the range of from 1 to 3 wt.-%, based on total weight of at least one component (A) and/or at least one component (B).

8. The multi-component resin system according to any one of claims 1 to 7, wherein at least one component (A) and at least one component (B) are present in a quantity ratio in which the average NCO functionality to the average NH functionality is between 0.3 and 2.0, and preferably 0.75 and 1.65.

9. The multi-component resin system according to any one of claims 1 to 8, **characterized in that** the multi-component resin system is a two-component resin system.

10. A mortar composition prepared by mixing at least one component (A) and at least one component (B) of the multi-component resin system according to any of the preceding claims.

11. A method of chemically fixing structural elements in drilled holes, wherein the mortar composition according to claim 10 or the multi-component resin system according to any one of claims 1 to 9 is used for chemical fixing.

12. A use of the mortar composition according to claim 10 or the multi-component resin system according to any one of claims 1 to 9 for chemically fixing anchoring means in drilled holes or for structural bonding, preferably for fixing anchoring means in drilled holes or for structural bonding under both wet and dry conditions.

13. A use of at least one filler and optionally at least one rheology additive to adjust the Schear viscosity to be in the range of from 10 to 42 Pa·s, preferably in the range of from 17 to 27 Pa s, of the multi-component resin system according to any one of claims 1 to 9 to increase the bond stress of an anchoring means chemically fixed by said multi-component resin system in a drilled hole.
